# EUROPÄISCHE PATENTSCHRIFT

(11) **EP 3 130 511 B1**
(45) Veröffentlichungstag und Bekanntmachung des Hinweises auf die Patenterteilung: **19.09.2018**
(21) Anmeldenummer: 16178820.3
(22) Anmeldetag: 11.07.2016
(51) Int. Cl.: B60R 11/02, H04W 4/00, H04B 5/00

(54) **VORRICHTUNG ZUM KOPPELN EINES MOBILKOMMUNIKATIONSGERÄTS MIT EINEM KRAFTFAHRZEUG**
DEVICE FOR COUPLING A MOBILE COMMUNICATION DEVICE WITH A MOTOR VEHICLE
DISPOSITIF DE RACCORDEMENT D'UN APPAREIL DE COMMUNICATION MOBILE A UN VEHICULE AUTOMOBILE

(30) Priorität: 10.08.2015 DE 102015215240
(43) Veröffentlichungstag der Anmeldung: 15.02.2017
(73) Patentinhaber: Volkswagen Aktiengesellschaft, 38440 Wolfsburg (DE)
(72) Erfinder: Köhnke, Axel, 48259 Dülmen (DE); Frauenfelder, Rainer, 31177 Harsum (DE)

(56) Entgegenhaltungen:
- EP-A1- 2 629 364
- WO-A1-2013/034285
- WO-A1-2015/064020
- WO-A2-2010/065408
- DE-A1-102011 120 250
- DE-A1-102012 020 611
- US-A1- 2014 058 586
- US-A1- 2015 038 073
- Anonymous: "Near field communication - Wikipedia, the free encyclopedia", , 31. Juli 2013 (2013-07-31), XP055098492, Gefunden im Internet: URL:http://en.wikipedia.org/w/index.php?ti tle=Near_field_communication&oldid=5666043 10 [gefunden am 2014-01-27]

## Beschreibung

Vorrichtung zum Koppeln eines Mobilkommunikationsgeräts mit einem Kraftfahrzeug Ausführungsbeispiele der vorliegenden Erfindung betreffen die Kommunikation zwischen einem Kraftfahrzeug und einem Mobilkommunikationsgerät mittels Nahfeldkommunikation. Insbesondere betreffen Ausführungsbeispiele der vorliegenden Erfindung eine Vorrichtung zum Koppeln eines Mobilkommunikationsgeräts mit einem Kraftfahrzeug.

Das Dokument WO2013/034285 A1 offenbart eine Vorrichtung zum Koppeln eines Mobilkommunikationsgeräts mit einem Kraftfahrzeug nach dem Oberbegriff des Anspruchs 1.

Nahfeldkommunikation (Near Field Communication, NFC) ist eine Funktechnologie, die einen kontaktlosen Austausch von Daten über kurze Strecken (z.B. über Distanzen von bis zu 20 Zentimetern) ermöglicht. Dafür werden Funksignale im MHz Bereich eingesetzt. Beispielsweise ermöglicht Nahfeldkommunikation eine Datenübertragungsrate von bis zu 424 kBit/s bei einer Funkfrequenz von 13,56 MHz und einem Abstand der Kommunikationspartner von etwa zehn Zentimetern.

Im Kraftfahrtbereich kann Nahfeldkommunikation zum Austausch von Daten zwischen einem Kraftfahrzeug und einem Mobilkommunikationsgerät (z.B. Mobiltelefon oder Tablet) eines Insassen des Kraftfahrzeugs verwendet werden. Beispielsweise kann eine Benutzererkennung, ein Anstoßen einer Bluetooth-Kommunikation oder einer WLAN-Kommunikation zwischen Kraftfahrzeug und Mobilkommunikationsgerät mittels Nahfeldkommunikation vorgenommen werden. Die räumliche Nähe zwischen Mobilkommunikationsgerät und Nahfeldkommunikationseinrichtung gewährleistet dabei zusätzliche Sicherheit. Weiterhin können beispielsweise Navigationsdaten zwischen dem Mobilkommunikationsgerät und einem Navigationssystem des Fahrzeugs oder Telefonnummern bzw. Kontaktinformationen zwischen dem Mobilkommunikationsgerät und Kommunikationseinrichtungen des Kraftfahrzeugs ausgetauscht werden. Auch mobiles Bezahlen mittels des Mobilkommunikationsgeräts kann über Nahfeldkommunikation abgewickelt werden. Nahfeldkommunikation kann somit eine kabellose Integration des Mobilkommunikationsgeräts in die Kommunikationsumgebung des Kraftfahrzeugs ermöglichen. Insbesondere kann Nahfeldkommunikation eine Interaktion des Benutzers mit dem Kraftfahrzeug erleichtern.

Beispielsweise kann im Kraftfahrzeug eine für die Nahfeldkommunikation bereitgestellte Antenne im Bereich einer Head-Unit (die weiterhin das Steuergerät für die Antenne beinhalten kann) der Mittelkonsole (d.h. am Armaturenbrett) oder in die Ladefläche eines kabellosen Ladegerätes für ein Mobilkommunikationsgerät integriert werden. Da Nahfeldkommunikation eine räumliche Nähe von Mobilkommunikationsgerät und der im Kraftfahrzeug für die Nahfeldkommunikation angebrachten Antenne voraussetzt, können Antennen an den vorgenannten Orten gewöhnlich nur von Insassen auf dem Fahrer- bzw. dem Beifahrersitz erreicht werden. Insassen im Fond des Kraftfahrzeugs können ein Mobilkommunikationsgerät gewöhnlich nicht in die benötigte Nähe zur Antenne bringen, sodass für sie eine Kommunikation bzw. Interaktion mit dem Kraftfahrzeug möglicherweise ausgeschlossen, jedoch zumindest erschwert ist. Weiterhin ist bei der Integration der Antenne in die Ladefläche des Ladegeräts die Antenne durch ein zu ladendes, auf der Ladefläche angeordnetes Mobilkommunikationsgerät verdeckt, sodass eine Nahfeldkommunikation mit einem weiteren Mobilkommunikationsgerät möglicherweise erschwert bzw. unmöglich ist. Weiterhin sind Ladegeräte für Mobilkommunikationsgeräte in der Mittelkonsole (z.B. unmittelbar im Armaturenbrett oder einem Übergangsbereich zum Mittelkonsolentunnel, d.h. in einem Bereich vor einem frontseitigen Ende der Vordersitze) angeordnet, sodass die Antenne für Nahfeldkommunikation für Insassen im Fond praktisch nicht zu erreichen ist.

Es besteht somit ein Erfordernis, eine Antenne für Nahfeldkommunikation an einem für alle Insassen des Kraftfahrzeugs gut erreichbaren Ort anzubringen.

Dieses Ziel wird mittels einer Vorrichtung zum Koppeln eines Mobilkommunikationsgeräts mit einem Kraftfahrzeug gemäß Anspruch 1 erreicht.

Ausführungsbeispiele der vorliegenden Erfindung ermöglichen dies durch eine Vorrichtung zum Koppeln eines Mobilkommunikationsgeräts mit einem Kraftfahrzeug. Dabei kann die Vorrichtung zwischen einem Fahrersitz und einem Beifahrersitz des Kraftfahrzeugs angeordnet werden. Die Vorrichtung umfasst eine Oberfläche, auf der das Mobilkommunikationsgerät angeordnet werden kann. Die Oberfläche ist dabei eine Oberfläche, die für einen Insassen des Fahrzeugs unmittelbar und frei zugänglich ist, d.h. die Oberfläche ist nicht durch weitere Bauteile (z.B. durch einen Deckel oder eine Klappe) verdeckbar oder verschließbar. Ein Insasse kann das Mobilkommunikationsgerät ohne weitere Handgriffe zur Freilegung der Oberfläche direkt auf dieser platzieren. Die Vorrichtung umfasst weiterhin eine Antenne, die eingerichtet ist, ein Funksignal zur Nahfeldkommunikation mit dem Mobilkommunikationsgerät abzustrahlen und/ oder zu empfangen. Die Antenne ist aufgrund der Anordnung der Vorrichtung zwischen Fahrer- und Beifahrersitz an einer zentralen Stelle des Fahrgastinnenraums des Kraftfahrzeugs angeordnet. Die Antenne kann daher sowohl von Insassen auf den Vordersitzen des Kraftfahrzeugs als auch von Fondpassagieren bequem erreicht werden. Beispielsweise kann die Antenne an einer Mittelarmlehne, einem Mittelkonsolentunnel (Mitteltunnel) oder einem Wählhebel für eine Fahrstufe bzw. einen Gang angeordnet sein. Beispielsweise kann die Oberfläche eine zur Nahfeldkommunikation ausreichende Nähe (z.B. 10 cm oder weniger) zur Antenne haben. Somit können sowohl Insassen auf den Vordersitzen als auch im Fond bequem ein Mobilkommunikationsgerät räumlich nahe an die Antenne heranführen, um so eine Kommunikation zwischen Kraftfahrzeug und Mobilkommunikationsgerät zu ermöglichen. Die Insassen können somit auf bequeme Weise mit dem Kraftfahrzeug interagieren.

Gemäß einigen Ausführungsbeispielen weist das Funksignal eine Frequenz kleiner 100 MHz auf. Der erfindungsgemäße Frequenzbereich des Funksignals kann daher eine Nahfeldkommunikation in dem lizenzfreien Frequenzband bei 13,56 MHz ermöglichen, sodass die Nahfeldkommunikation kostengünstig bereitgestellt werden kann. Weiterhin wird das Frequenzband von auf dem Markt erhältlichen Mobilkommunikationsgeräten unterstützt, so dass eine Kompatibilität mit vielen erhältlichen Mobilkommunikationsgeräten gewährleistet sein kann. Beispielsweise kann daher Nahfeldkommunikation mit einer Datenübertragungsrate von bis zu 424 kBit/s bei einem Abstand des Mobilkommunikationsgeräts von der Antenne von etwa zehn Zentimetern ermöglicht werden.

Gemäß der Erfindung umfasst die Vorrichtung eine Mittelarmlehne, die eingerichtet ist, einen Arm einer auf dem Fahrersitz oder dem Beifahrersitz befindlichen Person abzustützen. Die Mittelarmlehne ist ein Polsterteil, das mit Stoff und / oder Leder als Obermaterial überzogen sein kann und eine Auflagefläche für den Arm der Person bietet. Die Mittelarmlehne kann beispielsweise an dem Fahrersitz oder dem Beifahrersitz angeordnet, d.h. befestigt sein. Alternativ kann die Armlehne beispielsweise an einem Mittelkonsolentunnel (Mitteltunnel) des Kraftfahrzeugs, der sich an die Mittelkonsole im Armaturenbrett anschließt und entlang einer Längsrichtung des Kraftfahrzeugs zwischen Fahrer- und Beifahrersitz erstreckt und eine Vielzahl von Bedienelementen (Wählhebel für die Fahrstufe, Handbremse etc.) für das Kraftfahrzeug aufweisen kann, angeordnet sein. Die Mittelarmlehne kann dabei einstückig, d.h. als eine einzige zusammenhängende Auflagefläche für einen Arm, oder mehrstückig, d.h. als Anordnung mehrerer Teilauflagefläche, die zusammen eine Auflagefläche für einen Arm bilden, gebildet sein. Die Teilauflageflächen können dabei zueinander bewegbar sein (z.B. verschiebbar oder drehbar). Die Mittelarmlehne kann durch das Abstützen des Arms einen hohen Sitzkomfort für eine Person auf dem Fahrer- oder dem Beifahrersitz ermöglichen. Die Antenne ist dabei an der Mittelarmlehne angeordnet. Beispielsweise kann die Antenne auf einer äußeren Oberfläche (z.B. einem Obermaterial) der Mittelarmlehne angeordnet sein. Alternativ kann die Antenne innerhalb der Mittelarmlehne angeordnet sein. Beispielsweise kann die Antenne in ein Polstermaterial der Mittelarmlehne eingebettet sein. Die Mittelarmlehne ist an einer zentralen Stelle des Kraftfahrzeugs angeordnet und erlaubt damit eine besonders vorteilhafte Positionierung der Antenne. Statt der Armlehne kann auch eine andere zentral gelegene Oberfläche wie z.B. ein Tischelement Verwendung finden. Die Antenne kann aufgrund der zentralen Anbringung der Mittelarmlehne im Kraftfahrzeug sowohl von Insassen auf den Vordersitzen des Kraftfahrzeugs als auch von Fondpassagieren bequem erreicht werden. Somit können sowohl Insassen auf den Vordersitzen als auch im Fond bequem ein Mobilkommunikationsgerät räumlich nahe an die Antenne heranführen, um so eine Kommunikation zwischen Kraftfahrzeug und Mobilkommunikationsgerät zu ermöglichen. Gemäß einigen Ausführungsbeispielen ist die Antenne an einer vertikal oberen oder einer vertikal unteren Position der Mittelarmlehne angeordnet, wenn sich die Auflagefläche der Mittelarmlehne für den Arm der Person in einer horizontalen Stellung befindet. Die vertikal obere Position bzw. die vertikal untere Position ist dabei z.B. eine Position die einen vertikalen Abstand zu einem vertikal oberen bzw. einem vertikal unteren Obermaterial der Mittelarmlehne (d.h. einer Ober bzw. einer Unterseite der Mittelarmlehne) von nicht mehr als 5%, 10%, 15 %, 20 % oder 25 % einer vertikalen Bauhöhe der Mittelarmlehne aufweist. Die Anordnung an der vertikal oberen Position der Mittelarmlehne, beispielsweise knapp unterhalb des die Auflagefläche bildenden Obermaterials der Mittelarmlehne, kann einen geringen Abstand der Antenne zu einem Mobilkommunikationsgerät, das an die Auflagefläche der Mittelarmlehne gehalten bzw. positioniert ist, ermöglichen. Somit kann eine ausreichende Nähe zwischen Mobilkommunikationsgerät und Antenne für die Nahfeldkommunikation ermöglicht werden. Die Anordnung an der vertikal unteren Position der Mittelarmlehne, beispielsweise knapp oberhalb des vertikal unteren Obermaterials der Armlehne, kann einen geringen Abstand der Antenne zu einem ersten Mobilkommunikationsgerät, das unterhalb der Mittelarmlehne angeordnet bzw. gehalten ist (z.B. in einer Haltevorrichtung an dem Mittelkonsolentunnel oder einer Ladefläche eines kabellosen Ladegerätes), ermöglichen. Zudem kann die Anordnung an der vertikal unteren Position der Mittelarmlehne weiterhin einen geringen Abstand der Antenne zu einem zweiten Mobilkommunikationsgerät, das oberhalb der Mittelarmlehne angeordnet bzw. gehalten ist (z.B. durch einen Fondsinsassen) ermöglichen. Somit kann eine ausreichende Nähe zwischen der Antenne und beiden Mobilkommunikationsgeräten für die Nahfeldkommunikation ermöglicht werden.

Die Antenne muss vor mechanischer Belastung geschützt werden. Erfindungsgemäß ist die Antenne auf einem Träger angeordnet, der eine höhere Steifigkeit als die Antenne selbst aufweist. Gemäß manchen Ausführungsbeispielen kann der Träger eine Kombination einem steiferen und einem demgegenüber flexibleren Material aufweisen. Der Träger ist erfindungsgemäß zwischen der Antenne und einem Obermaterial der Mittelarmlehne, das einen geringsten vertikalen Abstand von der Antenne aufweist, wenn sich die Auflagefläche in der horizontalen Stellung befindet, angeordnet. Wenn sich die Antenne beispielsweise an der vertikal oberen Position befindet, ist der Träger zwischen dem Obermaterial, das die Auflagefläche bildet, und der Antenne angeordnet. Der Träger kann aufgrund seiner höheren Steifigkeit verhindern, dass die Antenne durch von außen einwirkende, mechanische Kräfte deformiert wird und somit möglicherweise beschädigt bzw. zerstört wird. Der Träger kann beispielsweise unmittelbar an das Obermaterial anschließen, sodass ein Insasse beim Berühren der Mittelarmlehne haptisch die Position der Antenne erkennen kann. Ergänzend kann der Träger über Nähte (z.B. Ziernähte) mit dem Obermaterial verbunden sein, sodass ein Benutzer neben der haptischen Wahrnehmung des Trägers auch optisch auf die Positionierung innerhalb der Mittelarmlehne hingewiesen wird. Die Verbindung mit dem Obermaterial kann auch mittels einer Verklebung oder einer Taschen/Einschubkonstruktion erfolgen. Bevorzugt ist der Träger dabei aus einem nichtmetallischen Material geformt, um eine Abstrahl- bzw. Empfangscharakteristik der Antenne nicht zu beeinflussen. Beispielsweise kann der Träger eine Leiterplatte sein, auf der die Antenne angeordnet ist. In alternativen Ausführungsbeispielen ist der Träger auf einer äußeren Oberfläche der Mittelarmlehne angeordnet. Somit kann eine haptische Wahrnehmung durch Fahrzeuginsassen erhöht werden (z.B. durch eine entsprechende Oberflächenstruktur des Trägers). Weiterhin kann beispielsweise durch eine entsprechende farbliche Gestaltung des Trägers eine optische Wahrnehmung durch Fahrzeuginsassen erhöht werden, sodass eine zielgerichtete Positionierung eines Mobilkommunikationsgeräts in der Nähe oder auf dem Träger (und somit nahe der Antenne) vereinfacht sein kann. Ergänzend kann der Träger zudem eine höhere Steifigkeit als ein Polstermaterial der Mittelarmlehne aufweisen. Dadurch kann sichergestellt werden, dass eine auf den Träger einwirkende Kraft durch (temporäre) Deformation des Polstermaterials absorbiert werden kann. Eine Sicherheit der Antenne vor mechanischer Deformation kann somit weiter erhöht werden.

Gemäß manchen Ausführungsbeispielen kann die Antenne als gedruckte Schaltung auf einer Leiterkarte (PCB: Printed Circuit Board) aufgebracht sein, die mit einem flexibleren Material verbunden bzw. überzogen werden kann. Dieses flexiblere Material kann eine dekorative Oberfläche darstellen und sich, wenn es an den Seiten übersteht leichter in das Material der Oberfläche bzw. Obermaterial integrieren lassen (z.B. durch Vernähen).

Gemäß einigen Ausführungsbeispielen ist die Oberfläche, auf der das Mobilkommunikationsgerät angeordnet werden kann, auf der Mittelarmlehne angeordnet und eingerichtet, das Mobilkommunikationsgerät an der Mittelarmlehne zu halten. Die Oberfläche kann es daher ermöglichen, das Mobilkommunikationsgerät sicher und in räumlicher Nähe zu der Antenne auf der Mittelarmlehne zu halten. Beispielsweise kann die Oberfläche eine antirutsch Beschichtung bzw. Struktur aufweisen, d.h. eine Oberfläche aufweisen, die eine ausreichend Haltekraft zwischen der Oberfläche selbst und einer Oberfläche des darauf angeordneten Mobilkommunikationsgeräts bereitstellen kann. Alternativ oder ergänzend kann die Oberfläche Teil einer Vertiefung in der Mittelarmlehne sein, in die das Mobilkommunikationsgerät eingelegt werden kann. Die Oberfläche kann ergänzend Klemmelemente aufweisen, um ein Verrutschen des Mobilkommunikationsgeräts zu verhindern. Die Auflagefläche der Mittelarmlehne ist für Insassen des Kraftfahrzeugs gut zugänglich, so dass auch ein Touch-Bildschirm eines auf der Oberfläche platzierten Mobilkommunikationsgeräts direkt für die Insassen zugänglich ist. Beispielswese könnte daher eine Bedienung eines Infotainment-Systems des Kraftfahrzeugs über das Mobilkommunikationsgerät für die Insassen sehr komfortabel sein.

In einigen Ausführungsbeispielen umfasst die Vorrichtung ferner ein separates Steuergerät, das mit der Antenne gekoppelt und eingerichtet ist, über die Antenne ein Signal an das Mobilkommunikationsgerät zu senden bzw. von dem Mobilkommunikationsgerät zu empfangen. Das Steuergerät erlaubt eine Steuerung der Antenne und somit der Nahfeldkommunikation zwischen Kraftfahrzeug und Mobilkommunikationsgerät. Die Separation von Steuergerät und Antenne erlaubt eine vielfältige Positionierung des Steuergeräts im Kraftfahrzeug, sodass eine ergonomische Gestaltung des Kraftfahrzeuginnenraums vereinfacht werden kann. Aufgrund der Separation von Steuergerät und Antenne kann weiterhin ein bereits im Kraftfahrzeug vorhandenes Steuergerät verwendet werden. Beispielsweise kann das bereits vorhandene Steuergerät um die Funktionalität zur Nahfeldkommunikation mittels der Antenne ergänzt werden. Dazu kann beispielsweise eine vorhandene Software des Steuergeräts zwecks Ergänzung der Funktionalität upgedatet werden. Das Steuergerät kann mit weiteren Steuergeräten oder Recheneinheiten des Kraftfahrzeugs gekoppelt sein. Eine Nahfeldkommunikationsschnittstelle für das Kraftfahrzeug kann somit unaufwändig und auch kostengünstig bereitgestellt werden.

In einigen Ausführungsbeispielen ist das Steuergerät ferner ausgebildet ist, eine Ladevorrichtung zu steuern. Die Ladevorrichtung ist dabei ausgebildet, drahtlos Energie zum Laden eines Energiespeichers des Mobilkommunikationsgeräts bereitzustellen (z.B. mittels Induktion). Alternativ oder ergänzend ist das Steuergerät ausgebildet, eine Kopplungsvorrichtung zu steuern. Die Kopplungsvorrichtung ist dabei ausgebildet, eine Außenantenne des Kraftfahrzeugs mit einer Antenne des Mobilkommunikationsgeräts zu koppeln. Das Steuergerät kann somit mehrere Funktionalitäten steuern, sodass möglicherweise nur ein einziges Steuergerät für die Steuerung der Funktionalitäten nötig ist. Beispielsweise kann ein bereits vorhandenes Steuergerät zur Steuerung der Ladevorrichtung bzw. der Kopplungsvorrichtung um die Nahfeldkommunikationsfunktion ergänzt werden, sodass dieses zusätzlich zur Steuerung der Antenne verwendet werden kann. Die Nahfeldkommunikationsfunktionalität für das Kraftfahrzeug kann somit möglichweise auf einfache und kostengünstige Weise unter Ausnutzung eines bereits vorhandenen Steuergeräts bereitgestellt werden.

Gemäß einigen Ausführungsbeispielen ist das Steuergerät an einem Mittelkonsolentunnel des Kraftfahrzeugs angeordnet. Somit kann beispielsweise ein bereits in dem Mittelkonsolentunnel vorhandenes Steuergerät verwendet werden. Die Anordnung in dem Mittelkonsolentunnel kann zudem kurze Leitungen zur Anbindung der Antenne an das Steuergerät erlauben. Beispielsweise können die Leitungen innerhalb eines Polstermaterials der Mittelarmlehne durch die Mittelarmlehne geführt werden und über eine Durchführung aus der Armlehne in Richtung des Mittelkonsolentunnels geführt werden. Gemäß alternativen Ausführungsbeispielen kann das Steuergerät an der Mittelarmlehne selbst angeordnet sein. Somit kann möglichweise ein bereits in der Mittelarmlehne vorhandenes Steuergerät genutzt werden oder ein Steuergerät in die Mittelarmlehne integriert werden. Beispielsweise kann ein Steuergerät in der Mittelarmlehne ein bisher in dem Mittelkonsolentunnel befindliches Steuergerät ersetzen. Ein Steuergerät in der Mittelarmlehne kann sehr kurze Leitungen zwischen Steuergerät und Antenne ermöglichen.

In einigen Ausführungsbeispielen ist die Mittelarmlehne bewegbar an dem Mittelkonsolentunnel angeordnet. Die Mittelarmlehne kann beispielsweise verschiebbar an dem Mittelkonsolentunnel angeordnet sein. Alternativ oder ergänzend kann die Mittelarmlehne drehbar an dem Mittelkonsolentunnel angeordnet sein. Die Stellung der Mittelarmlehne kann dadurch an Komfortbedürfnisse eines Insassen auf dem Fahrer- oder Beifahrersitz angepasst. Weiterhin kann die bewegbare Anbringung der Mittelarmlehne an dem Mittelkonsolentunnel ein Vorsehen von Aussparungen bzw. Vertiefungen oder sonstigen Funktionalitäten (z.B. eine Halterung) unterhalb der Mittelarmlehne ermöglichen. Durch ein Bewegen der Mittelarmlehne können diese verdeckt bzw. freigelegt werden. Ablagemöglichkeiten für ein Mobilkommunikationsgerät innerhalb des Mittelkonsolentunnels können somit bereitgestellt werden.

Gemäß einigen Ausführungsbeispielen ist die Ladevorrichtung an dem Mittelkonsolentunnel vertikal unterhalb einer Position der Antenne angeordnet. Die Positionierung der Ladevorrichtung an dem Mittelkonsolentunnel unterhalb der Antenne kann ein Laden eines ersten Mobilkommunikationsgeräts durch die Ladevorrichtung ermöglichen und zugleich eine räumliche Nähe des ersten Mobilkommunikationsgeräts zur an der Mittelarmlehne befindlichen Antenne sicherstellen. Insbesondere kann die Ladevorrichtung eingerichtet sein, das erste Mobilkommunikationsgerät an dem Mittelkonsolentunnel zu halten. Dazu kann die Ladevorrichtung z.B. eine Oberfläche mit ausreichender Haltekraft oder eine Halterung, in die das Mobilkommunikationsgerät eingelegt werden kann, aufweisen. Zudem kann weiterhin ein geringer Abstand der Antenne zu einem zweiten Mobilkommunikationsgerät, das oberhalb der Mittelarmlehne angeordnet bzw. gehalten ist (z.B. durch einen Fondsinsassen oder eine Halterung), ermöglicht werden. Somit kann eine ausreichende Nähe zwischen der Antenne und beiden Mobilkommunikationsgerät für die Nahfeldkommunikation ermöglicht werden, während eines der beiden Mobilkommunikationsgeräte geladen wird. Insbesondere kann eine relativ zu dem Mittelkonsolentunnel bewegbare Mittelarmlehne die Ladevorrichtung (mitsamt eingelegtem Mobilkommunikationsgerät) verdecken bzw. freilegen. Gemäß alternativen Ausführungsbeispielen kann die Ladevorrichtung separat von der Antenne an der Mittelarmlehne angeordnet sein. Somit kann ein Laden eines ersten Mobilkommunikationsgeräts durch die Ladevorrichtung und zugleich eine räumliche Nähe des ersten Mobilkommunikationsgeräts zur separaten, d.h. räumliche getrennten, Antenne ermöglicht werden. Gleichzeitig kann ein Verdecken der Antenne durch die Ladevorrichtung bzw. ein auf der Ladevorrichtung befindliche Mobilkommunikationsgerät vermieden werden. Beispielsweise kann das Mobilkommunikationsgerät auf der Oberfläche, die eingerichtet ist, das Mobilkommunikationsgerät an der Mittelarmlehne zu halten, angeordnet sein und die Ladevorrichtung derart zu der Oberfläche angeordnet sein, dass das Mobilkommunikationsgerät drahtlose geladen werden kann.

In einigen Ausführungsbeispielen ist das Steuergerät ferner ausgebildet, über die Antenne oder eine zweite mit dem Steuergerät gekoppelte Antenne ein Steuersignal zu senden, das das Mobilkommunikationsgerät veranlasst, eine vorbestimmte Applikation zu starten. Die zweite Antenne ist dabei eingerichtet, ein zweites Funksignal für eine zweite Kommunikationstechnologie abzustrahlen. Ein Insasse kann über die Applikation auf dem Mobilkommunikationsgerät möglichweise mit dem Kraftfahrzeug interagieren. Beispielsweise kann die Applikation das Mobilkommunikationsgerät in einen Auto-Modus (Car-Mode) versetzen, der z.B. eine Kopplung des Mobilkommunikationsgeräts mit dem Kraftfahrzeug bewirkt. Zum Beispiel kann eine Mirror-Link Verbindung zum Kraftfahrzeug aufgebaut werden und ein Touch-Bildschirm des Mobilkommunikationsgeräts als Eingabefläche für die Bedienung eines Infotainment-Systems des Kraftfahrzeugs dienen. Aufgrund der sehr guten Erreichbarkeit des Touch-Bildschirms des Mobilkommunikationsgeräts kann eine Bedienung des Infotainment-Systems für einen Insassen des Kraftfahrzeugs komfortabler sein. Auch kann die Applikation z.B. ein automatisches weiterleiten eines eingehenden Anrufs auf eine Freisprecheinrichtung des Kraftfahrzeugs bewirken, sodass eine Sicherheit für die Insassen des Fahrzeugs erhöht wird. Das Steuersignal kann dabei sowohl über Nahfeldkommunikation (d.h. über die Antenne) als auch über die zweite Kommunikationstechnologie (d.h. die zweite Antenne) ausgegeben werden. Beispielsweise kann abhängig von einer erwarteten Sende- bzw. Empfangsdatenmenge entschieden werden, ob das Steuersignal über die Antenne oder die zweite Antenne ausgesendet wird. Die zweite Kommunikationstechnologie kann beispielsweise genutzt werden, um die weitere Kommunikation zwischen Steuergerät und Mobilkommunikationsgerät nach Aussenden des Steuersignals durchzuführen. Die Nahfeldkommunikation kann dabei zum Anstoßen der Kommunikation über die zweite Kommunikationstechnologie genützt werden.

Gemäß einigen Ausführungsbeispielen genügt die zweite Kommunikationstechnologie der Norm IEEE 802.15.1 oder einer Norm der Normenfamilie IEEE 802.11 des Institute of Electrical and Electronics Engineers (IEEE). Die Norm IEEE 802.15.1 erlaubt eine Kommunikation mittels Bluetooth und Normen der Normenfamilie IEEE 802.11 erlauben Kommunikation mittels WLAN bzw. Wi-Fi. Zur Normfamilie IEEE 802.11 gehören insbesondere die Normen IEEE 802.11, IEEE 802.11a, IEEE 802.11b, IEEE 802.11c, IEEE 802.11d, IEEE 802.11e, IEEE 802.11f, IEEE 802.11g, IEEE 802.11h, IEEE 802.11i, IEEE 802.11j, IEEE 802.11k, IEEE 802.11m, IEEE 802.11n, IEEE 802.11o, IEEE 802.11p, IEEE 802.11q, IEEE 802.11r, IEEE 802.11s, IEEE 802.11t, IEEE 802.11u, IEEE 802.11v, IEEE 802.11w, IEEE 802.11z, IEEE 802.11aa, IEEE 802.11ac, IEEE 802.11ad, IEEE 802.11ae, IEEE 802.11af, IEEE 802.11ah, IEEE 802.11ai. Gewöhnliche, auf dem Markt erhältliche Mobilkommunikationsgeräte unterstützen zumindest eine der beiden Kommunikationstechnologien, so dass ein Austausch auch größerer Datenmengen zwischen Mobilkommunikationsgerät und Kraftfahrzeug möglich ist. Aufgrund der Verwendung von Frequenzen im Gigahertzbereich durch Bluetooth und WLAN ist möglicherweise eine Störung der Nahfeldkommunikation durch die zweite Antenne minimiert. Insofern in der Beschreibung als auch in den Patentansprüchen, d.h. in der gesamten Patentanmeldung, auf einzelne Normen Bezug genommen wird, so wird darunter die am Anmeldetag der Patentanmeldung geltende Fassung der jeweiligen Norm verstanden.

Ausführungsbeispiele der vorliegenden Erfindung betreffen weiterhin ein Kraftfahrzeug mit einer Vorrichtung gemäß Ausführungsbeispielen. Es kann daher ein Kraftfahrzeug bereitgestellt sein, das einen hohen Komfort für Insassen bei einer Nahfeldkommunikation mit dem Kraftfahrzeug ermöglicht.

Ausführungsbeispiele der vorliegenden Erfindung werden nachfolgend, Bezug nehmend auf die beigefügten Figuren, näher erläutert. Es zeigen:
Fig. 1 zeigt schematisch ein Ausführungsbeispiel einer Vorrichtung zum Koppeln eines Mobilkommunikationsgeräts mit einem Kraftfahrzeug;
Fig. 2a zeigt schematisch eine Teilansicht eines Schnitts durch eine Mittelarmlehne gemäß einem Ausführungsbeispiel;
Fig. 2b zeigt schematisch eine Teilansicht eines Schnitts durch eine Mittelarmlehne gemäß einem weiteren Ausführungsbeispiel;
Fig. 2c zeigt schematisch eine Teilansicht eines Schnitts durch eine Mittelarmlehne gemäß noch einem weiteren Ausführungsbeispiel; und
Fig. 3 zeigt schematisch eine Draufsicht auf einen Teil eines Kraftfahrzeugs mit einem Ausführungsbeispiel einer Vorrichtung zum Koppeln eines Mobilkommunikationsgeräts mit dem Kraftfahrzeug.

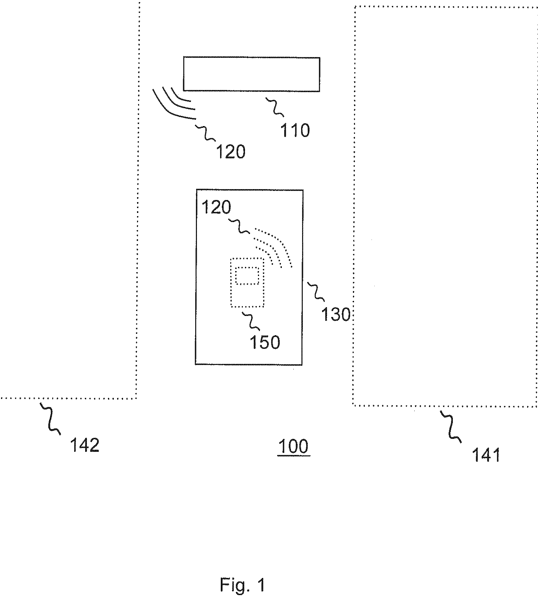

In der Fig. 1 ist eine Vorrichtung 100 für ein Kraftfahrzeug gezeigt, um ein Mobilkommunikationsgerät 150 mit dem Kraftfahrzeug zu koppeln. Die Vorrichtung 100 kann dabei zwischen einem Fahrersitz 141 und einem Beifahrersitz 142 des Kraftfahrzeugs angeordnet werden. Die Vorrichtung 100 weist eine Oberfläche 130 auf, auf der das Mobilkommunikationsgerät 150 angeordnet werden kann. Beispielsweise kann die Oberfläche 130 auf einer Mittelarmlehne oder einem Mittelkonsolentunnel des Kraftfahrzeugs bereitgestellt sein. Die Oberfläche 130 ist durch einen Insassen des Kraftfahrzeugs unmittelbar erreichbar, d.h. sie ist nicht durch weitere Komponenten des Kraftfahrzeugs verdeckt bzw. verdeckbar.

Die Vorrichtung 100 umfasst weiterhin eine Antenne 110. Beispielsweise kann die Antenne 110 in ein Polstermaterial der Mittelarmlehne, einen Wählhebel für eine Fahrstufe bzw. einen Gang oder den Mittelkonsolentunnel des Kraftfahrzeugs eingebettet sein. Die Antenne 110 ist eingerichtet, ein Funksignal 120 zur Nahfeldkommunikation mit dem Mobilkommunikationsgerät 150 abzustrahlen und / oder zu empfangen. Das Funksignal 120 weist dabei eine Frequenz kleiner 100 MHz auf (z.B. 13,56 MHz). Die Antenne 110 kann weiterhin mit einem Steuergerät (nicht gezeigt) gekoppelt sein. Das Mobilkommunikationsgerät 150 kann daher über die Antenne 110 mit dem Steuergerät, d.h. mit dem Kraftfahrzeug, kommunizieren.

Der Raum zwischen Fahrer- bzw. Beifahrersitz 141, 142 und somit auch die Antenne 110 kann sowohl von Insassen auf den Fahrer- bzw. Beifahrersitzen 141, 142 des Kraftfahrzeugs als auch von Passagieren im Fond bequem erreicht werden. Somit können sowohl Insassen auf den Vordersitzen als auch im Fond bequem das Mobilkommunikationsgerät 150 räumlich nahe an die Antenne 110 heranführen, um so eine Nahfeldkommunikation zwischen Kraftfahrzeug und Mobilkommunikationsgerät 150 zu ermöglichen. Die Insassen können somit auf bequeme Weise mit dem Kraftfahrzeug interagieren.

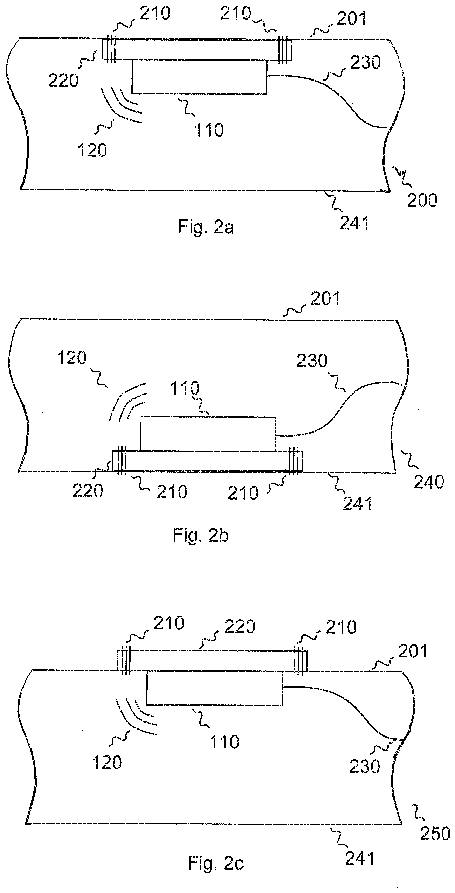

Wie oben ausgeführt, kann die Antenne in eine Mittelarmlehne des Kraftfahrzeugs eingebettet sein. In den nachfolgenden Figuren 2a bis 2c sind verschiedene Ausführungsbeispiele erfindungsgemäßer Mittelarmlehnen gezeigt.

Dabei zeigt Fig. 2a schematisch eine Teilansicht eines Schnitts durch eine Mittelarmlehne 200. Die Mittelarmlehne 200 ist horizontal angeordnet, d.h. eine Auflagefläche 201 für einen Arm einer Person befindet sich in einer horizontalen Stellung.

Die Antenne 110 ist dabei an einer vertikal oberen Position der Mittelarmlehne 200 angeordnet, d.h. die Antenne 110 weist einen vertikalen Abstand von der Auflagefläche 201 auf, der nicht mehr als 30 % einer vertikalen Bauhöhe der Mittelarmlehne 200 beträgt. Die vertikale Bauhöhe entspricht dem vertikalen Abstand zwischen der Auflagefläche 201 und einer Unterseite 241 der Mittelarmlehne 200. Die Antenne 110 ist über eine Leitung 230 mit einem Steuergerät (nicht gezeigt) gekoppelt. Die Leitung kann dabei durch Polstermaterial (nicht gezeigt) der Mittelarmlehne 200 geführt sein.

Die Antenne 110 ist auf einem Träger 220 angeordnet, der eine höhere Steifigkeit als die Antenne 110 selbst aufweist. Die Antenne 110 kann durch den Träger 220 vor einer Deformation in Folge einer von außen auf die Mittelarmlehne 200 einwirkenden mechanischen Kraft bewahrt werden. Der Träger kann hierbei auch als eine Kombination aus Leiterkartenmaterial, auf dem die Antenne aufgebracht ist und einem hiermit verbundenen flexibleren Material ausgeführt werden. Die Oberfläche kann dabei mit Ihrer Funktion entsprechenden Hinweisen versehen sein. Der Träger 220 ist durch Nähte 210 an der Auflagefläche 201 befestigt, d.h. der Träger 210 ist an einem Obermaterial der Mittelarmlehne 200 befestigt, das einen geringsten vertikalen Abstand von der Antenne 110 aufweist.

Insbesondere können die Nähte 210 Ziernähte sein, um an der Auflagefläche 201 die Position der Antenne 110 für einen Fahrzeuginsassen optisch und haptisch kenntlich zu machen. Der Träger 220 ist unmittelbar an der Auflagefläche 201 angeordnet, sodass aufgrund unterschiedlicher Steifigkeit von Träger 220 und umgebendem Polstermaterial der Träger 220 haptisch durch einen Insassen des Kraftfahrzeugs erkannt werden kann. So kann eine Position der Antenne 110 an der Mittelarmlehne 200 auch bei schwierigen Lichtverhältnissen im Kraftfahrzeug durch einen Insassen erkannt werden. Alternativ kann eine Trennschicht (nicht gezeigt) zwischen Auflagefläche 201 und Träger 220 angeordnet sein. Beispielsweise kann Polstermaterial zwischen der Auflagefläche 201 und dem Träger 220 angeordnet sein, um einen hohen Auflagekomfort für einen Insassen, der seinen Arm auf der Auflagefläche 201 ablegt, zu gewährleisten.

Die Anordnung der Antenne 110 unterhalb der Auflagefläche 201 kann einen geringen Abstand der Antenne zu einem Mobilkommunikationsgerät, das von außen an die Auflagefläche 201 gehalten oder positioniert wird, ermöglichen. Somit kann eine ausreichende Nähe zwischen Mobilkommunikationsgerät und Antenne 110 für die Nahfeldkommunikation ermöglicht werden.

Fig. 2b zeigt schematisch eine Teilansicht eines Schnitts durch eine alternative Mittelarmlehne 240. Im Gegensatz zu der in Fig. 2a gezeigten Mittelarmlehne 200 ist die Antenne 110 an einer vertikal unteren Position der Armlehne 240 gehalten, d.h. die Antenne 110 weist einen vertikalen Abstand von der Unterseite 241 auf, der nicht mehr als 30 % der vertikalen Bauhöhe der Mittelarmlehne 240 beträgt. Wiederum ist die Antenne 110 auf einem Träger 220 angeordnet, wobei dieser durch Nähte 210 oder eine andere geeignete Befestigung wie Verklebung, Verrastung, Verschraubung an der Unterseite 241 der Armlehne befestigt ist, d.h. der Träger 210 ist wiederum an einem Obermaterial der Mittelarmlehne 240 befestigt, das einen geringsten vertikalen Abstand von der Antenne 110 aufweist. Die Anordnung an der Unterseite 241 kann einen geringen Abstand der Antenne 110 zu einem ersten Mobilkommunikationsgerät, das unterhalb der Mittelarmlehne 240 angeordnet bzw. gehalten ist, ermöglichen. Zudem kann die Anordnung an der Unterseite 241 weiterhin einen geringen Abstand der Antenne zu einem zweiten Mobilkommunikationsgerät, das oberhalb der Auflagefläche 201 der Mittelarmlehne 240 angeordnet bzw. gehalten ist (z.B. durch einen Fondsinsassen), ermöglichen. Somit kann eine ausreichende Nähe zwischen der Antenne 110 und beiden Mobilkommunikationsgeräten für die Nahfeldkommunikation ermöglicht werden. Ein Vorteil dieser Lösung ist die verringerte Aufbauhöhe und die einheitlichere Haptik der Auflagefläche 201. Diese kann noch gesteigert werden, indem Antenne 110 und Träger 220 in eine Vertiefung des Kunststoffkörpers der Mittelarmlehne 240 verlegt werden (nicht gezeigt). Die Auflagefläche kann auch hier mit entsprechenden Hinweisen versehen sein. Die Antenne 110, eine Antennenleitung und das Trägermaterial 220 können gemäß Fig. 2b also in einer Vertiefung des Materials der Mittelarmlehne befestigt sein, um eine einheitliche Oberflächenhaptik zu erzeugen. Optional können auf der Auflagefläche 201 zum Hinweis auf die besondere Funktion dieser Fläche entsprechende visuelle oder Haptische Elemente angeordnet werden.

Fig. 2c zeigt schematisch eine Teilansicht eines Schnitts durch eine weitere alternative Mittelarmlehne 250. Im Gegensatz zu den in Figs. 2a und 2b gezeigten Ausführungsformen ist der Träger 220 außen auf der Auflagefläche 201, d.h. einer äußeren Oberfläche der Mittelarmlehne 250, angeordnet. Alternativ oder ergänzend kann der Träger 200 natürlich auch auf die Unterseite 241 der Mittelarmlehne 250 aufgesetzt sein. Die Anordnung des Trägers 220 auf einer äußeren Oberfläche der Mittelarmlehne 250 kann eine haptische Wahrnehmbarkeit des Trägers 220 und somit auch der Antenne 110 durch einen Insassen des Kraftfahrzeugs erhöhen. Insbesondere bei schwierigen Lichtverhältnissen in der Fahrgastzelle kann dadurch ein Erkennen der Position der Antenne 110 für einen Insassen erleichtert sein. Ergänzend kann durch eine entsprechende Strukturierung bzw. Materialwahl für den Träger 220 die haptische Wahrnehmbarkeit weiter erhöht werden. Weiterhin kann durch eine entsprechende optische, d.h. farbliche, Gestaltung des Trägers 220 auch eine bessere optische Wahrnehmbarkeit des Trägers 220 und somit auch der Antenne 110 erzielt werden. Der Träger kann hierbei auch als eine Kombination aus Leiterkartenmaterial, auf dem die Antenne aufgebracht ist und einem hiermit verbundenen flexibleren dekorativen Oberflächenmaterial (z.B. Leder) ausgeführt werden. Die Oberfläche kann dabei mit Ihrer Funktion entsprechenden Hinweisen versehen sein.

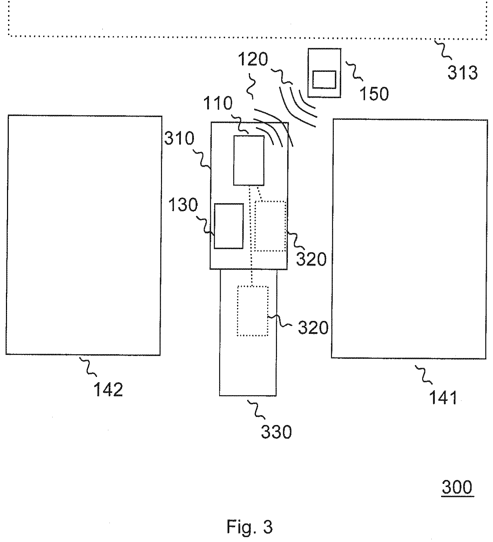

In der Fig. 3 ist eine schematische Draufsicht auf einen Teil eines Kraftfahrzeugs 300 gezeigt. Das Kraftfahrzeug 300 weist einen Fahrersitz 141 und einen Beifahrersitz 142 auf. Weiterhin weist das Fahrzeug 300 ein Fond 313 auf, der als Rückbank des Kraftfahrzeugs 300 angedeutet ist. Zwischen dem Fahrersitz 141 und dem Beifahrersitz 142 ist eine Mittelarmlehne 310 (z.B. wie in Figs. 2a bis 2c gezeigt) angeordnet. Die Armlehne 310 ist auf einem Mittelkonsolentunnel 330, der zumindest teilweise zwischen dem Fahrersitz 141 und dem Beifahrersitz 142 verläuft, angeordnet. Die Mittelarmlehne 310 kann z.B. bewegbar (dreh- bzw. verschiebbar) auf dem Mittelkonsolentunnel 330 angeordnet sein. Auch kann die Mittelarmlehne 310 aus mehreren Teilauflageflächen gebildet sein, die zusammen eine Auflagefläche für einen Arm einer Person bilden. Alternativ kann die Armlehne z.B. auch an dem Fahrersitz 141 oder dem Beifahrersitz 142 angeordnet sein.

Die Armlehne 310 weist eine Antenne 110 auf. Die Antenne 110 ist eingerichtet, ein Funksignal 120 zur Nahfeldkommunikation mit einem Mobilkommunikationsgerät 150 abzustrahlen und/ oder zu empfangen. Beispielsweise kann auf der Mittelarmlehne 310 eine Oberfläche 130 bereitgestellt sein, auf der das Mobilkommunikationsgerät 150, angeordnet werden kann. Die Oberfläche 130 kann als Haltevorrichtung dienen, um das Mobilkommunikationsgerät 150 an der Mittelarmlehne 310 zu halten. Dazu kann die Oberfläche 130 z.B. Teil einer Vertiefung in der Mittelarmlehne 310 sein, in die das Mobilkommunikationsgerät 150 eingelegt werden kann (und das weitere Klemmmittel zum Klemmen des Mobilkommunikationsgeräts 150 aufweisen kann), oder eine entsprechende Beschichtung bzw. Oberflächenstruktur aufweisen, um eine ausreichende Haftkraft zwischen der Oberfläche 130 und einer Oberfläche des Mobilkommunikationsgeräts 150 bereitzustellen.

Die Antenne 110 ist mit einem separaten Steuergerät 320 gekoppelt. Das Steuergerät 320 ist dabei eingerichtet, über die Antenne 110 ein Signal an das Mobilkommunikationsgerät 150 zu senden bzw. von dem Mobilkommunikationsgerät 150 zu empfangen. Wie in der Fig. 3 angedeutet, kann das Steuergerät 320 an einer Vielzahl möglicher Positionen im Kraftfahrzeug 300 angeordnet sein. Beispielsweise kann das Steuergerät 320 an dem Mittelkonsolentunnel 330 des Kraftfahrzeugs 300 oder an der Mittelarmlehne 310 angeordnet sein. Insbesondere kann das Steuergerät 320 ein bereits im Kraftfahrzeug 300 vorhandenes Steuergerät sein, das um die Funktionalität der Nahfeldkommunikation erweitert wurde (z.B. durch ein Update der bestehenden Software). Beispielsweise kann es sich um ein Steuergerät für eine Ladevorrichtung (nicht gezeigt) für das Mobilkommunikationsgerät 150 handeln. Die Ladevorrichtung kann beispielsweise an dem Mittelkonsolentunnel 330 oder an der Mittelarmlehne 310 angebracht sein. Dadurch kann eine Nahfeldkommunikation zwischen Mobilkommunikationsgerät 150 und Kraftfahrzeug 300 ermöglicht werden, während das Mobilkommunikationsgerät 150 drahtlos geladen wird. Alternativ oder ergänzend kann das Steuergerät 320 auch eine Koppelvorrichtung steuern, um eine Antenne des Mobilkommunikationsgeräts 150 mit einer Außenantenne des Kraftfahrzeugs 300 zu koppeln, um so eine Verbindung zu einem Mobilfunknetz zu verbessern.

Wie durch die Position das Mobilkommunikationsgerät 150 angedeutet, kann die Antenne 110 sowohl von Insassen im Fond 313 des Kraftfahrzeugs 300 als auch von Insassen auf dem Fahrer- bzw. Beifahrersitz 141, 142 gut erreicht werden. Eine Kommunikation mit dem Kraftfahrzeug 300 mittels des Mobilkommunikationsgeräts 150 kann somit für einen Insassen sehr einfach und bequem sein.

Durch die Verwendung eines bereits im Kraftfahrzeug vorhandenen Steuergeräts 320 für die Bereitstellung der Nahfeldkommunikationsschnittstelle kann die Schnittstelle mit nur wenigen weiteren Bauteilen (Antenne 110 und Leitung zum Steuergerät) realisiert werden. Das Bereitstellen der Möglichkeit von Nahfeldkommunikation durch das Kraftfahrzeug 300 kann daher kostengünstig und unaufwändig sein.

### Bezugszeichenliste

- 100: Vorrichtung
- 110: Antenne
- 120: Funksignal
- 130: Oberfläche
- 141: Fahrersitz
- 142: Beifahrersitz
- 150: Mobilkommunikationsgerät
- 200: Mittelarmlehne
- 201: Auflagefläche
- 210: Naht
- 220: Träger
- 230: Leitung
- 240: Mittelarmlehne
- 241: Unterseite der Mittelarmlehne
- 250: Mittelarmlehne
- 300: Kraftfahrzeug
- 313: Fond des Kraftfahrzeugs
- 310: Mittelarmlehne
- 320: Steuergerät
- 330: Mittelkonsolentunnel

## Patentansprüche

1. Vorrichtung (100) zum Koppeln eines Mobilkommunikationsgeräts (150) mit einem Kraftfahrzeug (300), wobei die Vorrichtung (100) zwischen einem Fahrersitz (141) und einem Beifahrersitz (142) des Kraftfahrzeugs angeordnet werden kann, und wobei die Vorrichtung (100) Folgendes umfasst:
eine Oberfläche (130), auf der das Mobilkommunikationsgerät (150) angeordnet werden kann; und
eine Antenne (110), die eingerichtet ist, ein Funksignal (120) zur Nahfeldkommunikation mit dem Mobilkommunikationsgerät (150) abzustrahlen und / oder zu empfangen,
wobei die Vorrichtung (100) eine Mittelarmlehne (200, 240, 250, 310) umfasst, die eingerichtet ist, einen Arm einer auf dem Fahrersitz (141) oder dem Beifahrersitz (142) befindlichen Person abzustützen, wobei die Antenne (110) an einer vertikal oberen oder einer vertikal unteren Position der Mittelarmlehne (200, 240, 250) angeordnet ist, wenn sich eine Auflagefläche (201) der Mittelarmlehne für den Arm der Person in einer horizontalen Stellung befindet, **dadurch gekennzeichnet, dass** die Antenne (110) auf einem Träger (220) angeordnet ist, der eine höhere Steifigkeit als die Antenne (110) selbst aufweist, und dass der Träger (220) zwischen der Antenne (110) und einem Obermaterial der Mittelarmlehne (200, 240), das einen geringsten vertikalen Abstand von der Antenne (110) aufweist, wenn sich die Auflagefläche (201) in der horizontalen Stellung befindet, angeordnet ist.

2. Vorrichtung nach Anspruch 1, wobei das Funksignal eine Frequenz kleiner 100 MHz aufweist.

3. Vorrichtung nach einem der Ansprüche 1 oder 2, wobei die Oberfläche (130), auf der das Mobilkommunikationsgerät (150) angeordnet werden kann, auf der Mittelarmlehne (200, 240, 250, 310) angeordnet und eingerichtet ist, das Mobilkommunikationsgerät (150) an der Mittelarmlehne (200, 240, 250, 310) zu halten.

4. Vorrichtung nach einem der Ansprüche 1 bis 3, wobei die Vorrichtung ferner ein separates Steuergerät (320) umfasst, das mit der Antenne (110) gekoppelt und eingerichtet ist, über die Antenne (110) ein Signal an das Mobilkommunikationsgerät (150) zu senden bzw. von dem Mobilkommunikationsgerät (150) zu empfangen.

5. Vorrichtung nach Anspruch 4, wobei das Steuergerät (320) ferner ausgebildet ist, eine Ladevorrichtung zu steuern, die ausgebildet ist, drahtlos Energie zum Laden eines Energiespeichers des Mobilkommunikationsgeräts bereitzustellen, und / oder eine Kopplungsvorrichtung zu steuern, die ausgebildet ist, eine Außenantenne des Kraftfahrzeugs mit einer Antenne des Mobilkommunikationsgeräts zu koppeln.

6. Vorrichtung nach Anspruch 5, wobei das Steuergerät (320) an einem Mittelkonsolentunnel (330) des Kraftfahrzeugs (300) anordenbar ist.

7. Vorrichtung nach Anspruch 6, wobei die Mittelarmlehne (310) bewegbar an dem Mittelkonsolentunnel (330) anordenbar ist.

8. Vorrichtung nach Anspruch 7, wobei die Ladevorrichtung an dem Mittelkonsolentunnel (330) vertikal unterhalb einer Position der Antenne (110) anordenbar ist.

9. Vorrichtung nach einem der Ansprüche 4 bis 8, wobei das Steuergerät (320) ferner ausgebildet ist, über die Antenne (110) oder eine zweite mit dem Steuergerät gekoppelte Antenne, die eingerichtet ist, ein zweites Funksignal für eine zweite Kommunikationstechnologie abzustrahlen, ein Steuersignal zu senden, das das Mobilkommunikationsgerät (150) veranlasst, eine vorbestimmte Applikation zu starten.

10. Vorrichtung nach Anspruch 9, wobei die zweite Kommunikationstechnologie der Norm IEEE 802.15.1 oder einer Norm der Normenfamilie IEEE 802.11 des Institute of Electrical and Electronics Engineers (IEEE) genügt.

11. Kraftfahrzeug (300) mit einer Vorrichtung (100) nach einem der Ansprüche 1 bis 10.

## Claims

1. Apparatus (100) for coupling a mobile communication device (150) to a motor vehicle (300), wherein the apparatus (100) can be arranged between a driver's seat (141) and a passenger seat (142) of the motor vehicle, and wherein the apparatus (100) comprises the following:
a surface (130) on which the mobile communication device (150) can be arranged; and
an antenna (110) which is set up to emit and/or receive a radio signal (120) for near field communication with the mobile communication device (150),
wherein the apparatus (100) comprises a central armrest (200, 240, 250, 310) which is set up to support an arm of a person on the driver's seat (141) or the passenger seat (142), wherein the antenna (110) is arranged at a vertically upper position or a vertically lower position of the central armrest (200, 240, 250) when a supporting surface (201) of the central armrest for the arm of the person is in a horizontal position, **characterized in that**
the antenna (110) is arranged on a carrier (220) which has a higher rigidity than the antenna (110) itself, and **in that**
the carrier (220) is arranged between the antenna (110) and an upper material of the central armrest (200, 240), which upper material has a shortest vertical distance from the antenna (110) when the supporting surface (201) is in the horizontal position.

2. Apparatus according to Claim 1, wherein the radio signal has a frequency of less than 100 MHz.

3. Apparatus according to either of Claims 1 and 2, wherein the surface (130) on which the mobile communication device (150) can be arranged is arranged on the central armrest (200, 240, 250, 310) and is set up to hold the mobile communication device (150) on the central armrest (200, 240, 250, 310).

4. Apparatus according to one of Claims 1 to 3, wherein the apparatus also comprises a separate control device (320) which is coupled to the antenna (110) and is set up to transmit a signal to the mobile communication device (150) and to receive a signal from the mobile communication device (150) via the antenna (110).

5. Apparatus according to Claim 4, wherein the control device (320) is also designed to control a charging apparatus which is designed to wirelessly provide energy for charging an energy store of the mobile communication device, and/or to control a coupling apparatus which is designed to couple an external antenna of the motor vehicle to an antenna of the mobile communication device.

6. Apparatus according to Claim 5, wherein the control device (320) can be arranged on a centre console tunnel (330) of the motor vehicle (300).

7. Apparatus according to Claim 6, wherein the central armrest (310) can be arranged in a movable manner on the centre console tunnel (330).

8. Apparatus according to Claim 7, wherein the charging apparatus can be arranged on the centre console tunnel (330) vertically beneath a position of the antenna (110).

9. Apparatus according to one of Claims 4 to 8, wherein the control device (320) is also designed to transmit a control signal, which causes the mobile communication device (150) to start a predetermined application, via the antenna (110) or a second antenna which is coupled to the control device and is set up to emit a second radio signal for a second communication technology.

10. Apparatus according to Claim 9, wherein the second communication technology conforms to the IEEE 802.15.1 standard or to a standard in the IEEE 802.11 family of standards of the Institute of Electrical and Electronics Engineers (IEEE).

11. Motor vehicle (300) having an apparatus (100) according to one of Claims 1 to 10.

## Revendications

1. Dispositif (100) pour connecter un appareil de communication mobile (150) à un véhicule automobile (300), le dispositif (100) pouvant être disposé entre un siège de conducteur (141) et un siège de passager (142) du véhicule automobile, et le dispositif (100) comportant les éléments suivants :
une surface (130) sur laquelle peut être disposé l'appareil de communication mobile (150) ; et
une antenne (110) qui est conçue pour émettre et/ou recevoir un signal radioélectrique (120) servant à la communication de champ proche avec l'appareil de communication mobile (150),
le dispositif (100) comportant un accoudoir central (200, 240, 250, 310) qui est conçu pour soutenir un bras d'une personne qui se trouve sur le siège de conducteur (141) ou le siège de passager (142), l'antenne (110) étant disposée au niveau d'une position verticale supérieure ou verticale inférieure de l'accoudoir central (200, 240, 250) lorsqu'une surface d'appui (201) de l'accoudoir central pour le bras de la personne se trouve dans une position horizontale,
**caractérisé en ce que**
l'antenne (110) est disposée sur un élément porteur (220) qui présente une rigidité supérieure à celle de l'antenne (110) elle-même et **en ce que** l'élément porteur (220) est disposé entre l'antenne (110) et un matériau extérieur de l'accoudoir central (200, 240) qui présente un écart vertical plus faible par rapport à l'antenne (11) lorsque la surface d'appui (201) se trouve dans la direction horizontale.

2. Dispositif selon la revendication 1, le signal radioélectrique possédant une fréquence inférieure à 1000 kHz.

3. Dispositif selon l'une des revendications 1 ou 2, la surface (130) sur laquelle peut être disposé l'appareil de communication mobile (150) étant disposée sur l'accoudoir central (200, 240, 250, 310) et étant conçue pour maintenir l'appareil de communication mobile (150) à l'accoudoir central (200, 240, 250, 310) .

4. Dispositif selon l'une des revendications 1 à 3, le dispositif comportant en outre un contrôleur (320) séparé qui est connecté à l'antenne (110) et qui est conçu pour, par le biais de l'antenne (110), envoyer un signal à l'appareil de communication mobile (150) ou en recevoir un de la part de l'appareil de communication mobile (150).

5. Dispositif selon la revendication 4, le contrôleur (320) étant en outre configuré pour commander un dispositif de charge qui est conçu pour fournir de l'énergie sans fil destinée à charger un accumulateur d'énergie de l'appareil de communication mobile et/ou pour commander un dispositif de connexion qui est conçu pour connecter une antenne externe du véhicule à une antenne de l'appareil de communication mobile.

6. Dispositif selon la revendication 5, le contrôleur (320) pouvant être disposé au niveau d'un tunnel de console centrale (330) du véhicule automobile (300).

7. Dispositif selon la revendication 6, l'accoudoir central (310) pouvant être monté mobile au niveau du tunnel de console centrale (330).

8. Dispositif selon la revendication 7, le dispositif de charge pouvant être disposé sur le tunnel de console centrale (330) verticalement au-dessous d'une position de l'antenne (110).

9. Dispositif selon l'une des revendications 4 à 8, le contrôleur (320) étant en outre configuré pour envoyer, par le biais de l'antenne (110) ou d'une deuxième antenne connectée au contrôleur, laquelle est configurée pour émettre un deuxième signal radioélectrique pour une deuxième technologie de communication, un signal de commande qui amène l'appareil de communication mobile (150) à démarrer une application prédéfinie.

10. Dispositif selon la revendication 9, la deuxième technologie de communication étant conforme à la norme IEEE 802.15.1 ou à une norme de la famille de normes IEEE 802.11 de l'Institut des ingénieurs électriciens et électroniciens (IEEE).

11. Véhicule automobile (300) équipé d'un dispositif (100) selon l'une des revendications 1 à 10.
